# DEMANDE DE BREVET EUROPEEN

(11) **EP 1 369 273 A1**
(43) Date de publication de la demande: **10.12.2003**
(21) Numéro de dépôt: 03291337.8
(22) Date de dépôt: 04.06.2003
(51) Int. Cl.: B60J 5/10, B60R 9/04

(54) **Véhicule automobile à volet arrière articulé sur les barres de toits**

(30) Priorité: 07.06.2002 FR 0207021
(71) Demandeur: Peugeot Citroen Automobiles SA, 78140 Vélizy Villacoublay (FR)
(72) Inventeur: Calvet, Frédéric, 92500 Rueil-Malmaison (FR); Devaux, Daniel, 77183 Croissy-Beaubourg (FR)
(74) Mandataire: Thinat, Michel

(57) **Abrégé**

L'invention concerne un véhicule automobile, notamment de type break, comprenant une caisse (10) présentant une face arrière (11) percée d'une ouverture de chargement arrière (13), un volet arrière (30) mobile en rotation par rapport à la caisse (10) entre une position fermée dans laquelle le volet arrière (30) obture l'ouverture arrière (13) et une position ouverte dans laquelle le volet arrière (30) dégage l'ouverture arrière (13), et un dispositif d'articulation (40) du volet arrière (30) sur la caisse (10), la caisse (10) comprenant un toit (12) et deux barres de toit (20) longitudinales faisant saillie au dessus du toit (12) et fixées des deux côtés latéraux opposés du toit (12).

Selon l'invention, le dispositif d'articulation (40) comprend deux axes d'articulation (41) du volet arrière (30) sur la caisse (10) disposés à l'intérieur des barres de toit (20).

## Description

L'invention concerne en général les véhicules automobiles, notamment de type break, et les volets arrière de véhicules automobiles.

Plus précisément, l'invention concerne un véhicule automobile, notamment de type break, comprenant une caisse présentant face arrière percée d'une ouverture de chargement arrière, un volet arrière mobile en rotation par rapport à la caisse entre une position fermée dans laquelle le volet arrière obture l'ouverture arrière et une position ouverte dans laquelle le volet arrière dégage l'ouverture arrière, et un dispositif d'articulation du volet arrière sur la caisse, la caisse comprenant un toit et deux barres de toit longitudinales faisant saillie au dessus du toit et fixées des deux côtés latéraux opposés du toit.

Des véhicules de ce type sont connus de l'art antérieur, et comprennent généralement des faces arrière sensiblement planes, pratiquement perpendiculaire au toit du véhicule. L'ouverture de chargement occupe la plus grande partie de cette face arrière et s'étend vers le haut jusqu'au bord arrière du toit. Le dispositif d'articulation du volet comprend deux axes d'articulation, fixés aux deux bords latéraux opposés de l'ouverture. Ces axes sont généralement disposés tout en haut de ces deux bords, juste en dessous du toit.

Les véhicules de l'art antérieur présentent le défaut que l'ouverture de chargement n'est pas entièrement dégagée en position ouverte du volet, limitant ainsi la taille des objets qui peuvent être introduits à travers l'ouverture. Certains objets ne peuvent pour cette raison pas être transportés dans le véhicule, bien que la taille du coffre du véhicule soit suffisante pour les recevoir.

Dans ce contexte, la présente invention a pour but de pallier les inconvénients cités ci-dessus.

A cette fin, le véhicule de l'invention, par ailleurs conforme à la définition générique qu'en donne le préambule ci-dessus, est essentiellement caractérisé en ce que le dispositif d'articulation comprend deux axes d'articulation du volet arrière sur la caisse disposés à l'intérieur des barres de toit.

Dans un mode de réalisation possible de l'invention, chaque barre de toit comprend un pied arrière relativement proche d'un bord arrière du toit, les barres de toits étant solidaires du toit par ces pieds arrière, les axes d'articulation du dispositif d'articulation étant logés dans ces pieds arrière.

Avantageusement, le volet peut comprendre un panneau présentant un bord supérieur s'étendant parallèlement et à proximité du bord arrière du toit, et deux montants latéraux opposés solidaires du panneau, ces montants comprenant des parties d'extrémité faisant saillie par rapport à ce bord supérieur, le dispositif d'articulation comprenant deux fourreaux libres en rotation autour des deux axes d'articulation et solidaires des parties d'extrémités des montants latéraux du volet.

De préférence, les pieds arrière peuvent comprendre des faces arrière présentant un bord inférieur parallèle au bord supérieur du panneau, ces faces arrière comprenant chacune un orifice ouvert au niveau du bord inférieur et présentant un fond opposé au bord inférieur, les parties d'extrémité des montants latéraux étant engagées dans ces orifices et comprenant des plaques extérieures venant fermer ces orifices en position fermée du volet en affleurant par rapport à la face arrière du pied, les plaques extérieures de chaque partie d'extrémité présentant un bord libre disposé en regard du fond de l'orifice en position fermée du volet.

Par exemple, les faces arrière des pieds arrière sont inclinées dans le sens anti-horaire par rapport à la verticale, les axes d'articulation étant situés sous les orifices, de telle sorte que les bords libres des plaques extérieures des montant s'escamotent dans les pieds arrière en position ouverte du volet.

Avantageusement, chaque axe d'articulation peut être situé relativement plus vers l'avant du véhicule que l'orifice correspondant, la plaque extérieure fermant l'orifice étant inclinée en position fermée du volet de telle sorte que, dans un plan perpendiculaire à l'axe d'articulation, le segment de droite joignant ledit axe d'articulation au bord libre de la plaque extérieure dessine un angle obtus avec ladite plaque extérieure, les bords libres des plaques extérieures venant alors se placer au dessus des barres de toit en position ouverte du volet.

De préférence, les montants peuvent comprendre chacun un bras d'articulation intérieur s'étendant le long de la plus grande partie du montant solidaire de la plaque extérieure, le dispositif d'articulation comprenant un flasque présentant une partie en anneau solidaire par un bord radialement intérieur du fourreau et une deuxième partie allongée solidaire de la première, la première partie en anneau étant solidaire de la plaque extérieure et la deuxième partie allongée étant solidaire du bras d'articulation.

Par exemple, le dispositif d'articulation peuvent comprendre dans chaque pied arrière des premier et second renforts perpendiculaires à l'axe d'articulation et solidaires de la caisse, l'axe d'articulation logé dans ledit pied s'étendant entre ces deux renforts et étant solidaire de ceux-ci.

Avantageusement, l'axe d'articulation peut comprendre une tête, un corps cylindrique présentant des première et seconde faces axiales et solidaire de la tête par sa première face axiale, et une partie d'extrémité filetée solidaire de la seconde face axiale du corps cylindrique, la tête , le corps cylindrique et la partie d'extrémité présentant des sections de tailles décroissantes dans cet ordre dans un plan perpendiculaire à l'axe du corps cylindrique, les premier et second renforts comprenant des premier et second trous de tailles décroissantes, la partie d'extrémité et le corps cylindrique étant respectivement engagés dans les second et premier trous, de telle sorte que la tête vient en appui contre une face extérieure du premier renfort opposée au second renfort, le corps s'étendant entre les premier et second renforts et venant en appui contre une face intérieure du second renfort en vis à vis du premier renfort, et la partie d'extrémité faisant saillie sur une face extérieure du second renfort opposée à la face intérieure, un écrou étant vissé sur la partie d'extrémité filetée.

Par exemple, la tête de l'axe d'articulation peut porter un relief en creux sur une face extérieure opposée au corps cylindrique, la barre de toit correspondante comprenant un orifice muni d'un bouchon amovible en regard de ladite face extérieure permettant d'introduire un outil de forme correspondante au relief en creux dans le pied arrière pour régler ou démonter l'axe d'articulation.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective de l'arrière d'un véhicule selon l'invention, le volet arrière étant en position fermée,
- la figure 2 est une vue en coupe dans le plan II-II de la figure 1, le volet arrière étant en position fermé,
- la figure 3 est une vue identique à la figure 2, le volet étant en position ouverte,
- la figure 4 est une vue en coupe transversale dans le plan IV-IV de la figure 1,
- la figure 5 est une vue en coupe horizontale dans le plan V-V de la figure 1,
- la figure 6 est une vue en coupe longitudinale d'une première variante de réalisation de l'invention, dans le plan VI-VI de la figure 1,
- la figure 7 est une vue identique à la figure 6, pour un second mode de réalisation de l'invention.

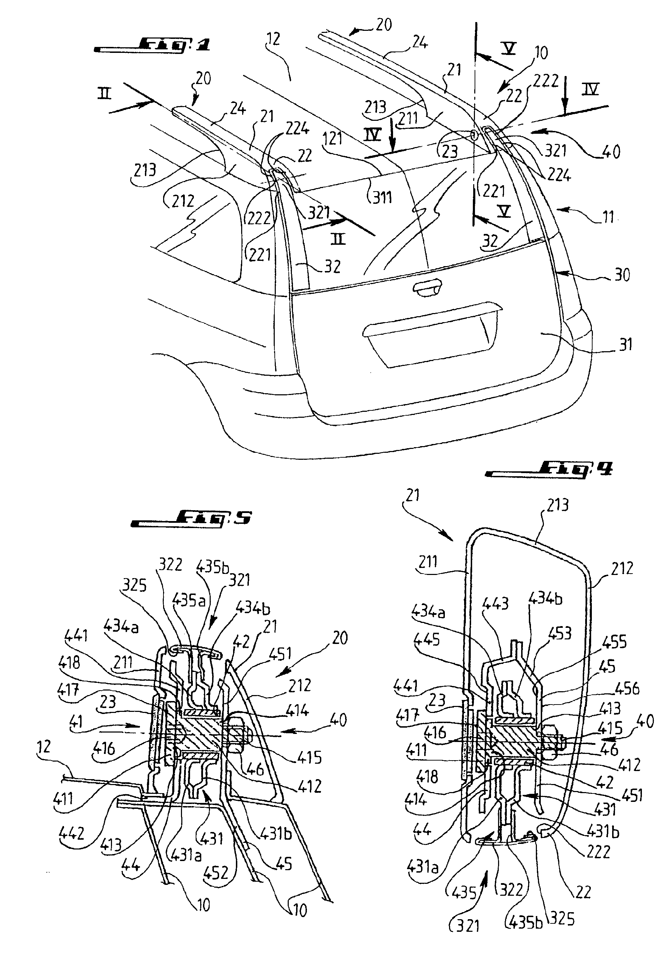

La figure 1 représente un véhicule automobile de type break, comprenant une caisse 10 présentant une face arrière 11 percée d'une ouverture de chargement arrière 13, un volet arrière 30 mobile en rotation par rapport à la caisse 10 entre une position fermée dans laquelle le volet arrière 30 obture l'ouverture arrière 13 et une position ouverte dans laquelle le volet arrière 30 dégage l'ouverture arrière 13, et un dispositif d'articulation 40 du volet arrière 30 sur la caisse 10.

La caisse 10 comprend un toit 12 sensiblement horizontal, et deux barres de toit 20 longitudinales faisant saillie au dessus du toit 12 et fixées de deux côtés latéraux opposés de ce toit 12.

Le toit 12 présente un bord arrière 121 au moins en partie transversal.

La face arrière 11 est transversale, sensiblement plane et s'étend pratiquement perpendiculairement au toit 12 à partir du bord arrière 121. Elle peut également être inclinée dans le sens anti-horaire par rapport à la verticale.

L'ouverture de chargement arrière 13 occupe une grande partie de la face arrière 11, et s'étend jusqu'au bord arrière 121 du toit 12.

Selon l'invention, le dispositif d'articulation 40 comprend deux axes d'articulation 41 du volet arrière 30 sur la caisse 10 disposés à l'intérieur des barres de toit 20.

Ces axes d'articulation 41 sont donc disposés au-dessus du toit. Le volet arrière 30, dans sa position ouverte, est alors situé entièrement au-dessus de l'ouverture arrière 13, dégageant celle-ci intégralement. On peur donc profiter de toute la taille de l'ouverture arrière pour introduire des objets dans le véhicule.

Ces axes 41 sont transversaux et alignés l'un avec l'autre.

Plus précisément, chaque barre de toit comprend une barre longitudinale 24, et un pied arrière 21 prolongeant la barre longitudinale 24 par une extrémité arrière de celle-ci. La barre 24 et le pied arrière 21 sont venus de matière.

Les barres de toits 20 sont solidaires du toit 12 par leurs pieds arrière 21 respectifs. Les moyens de fixation des pieds sur le toit sont connus et ne seront pas détaillés ici.

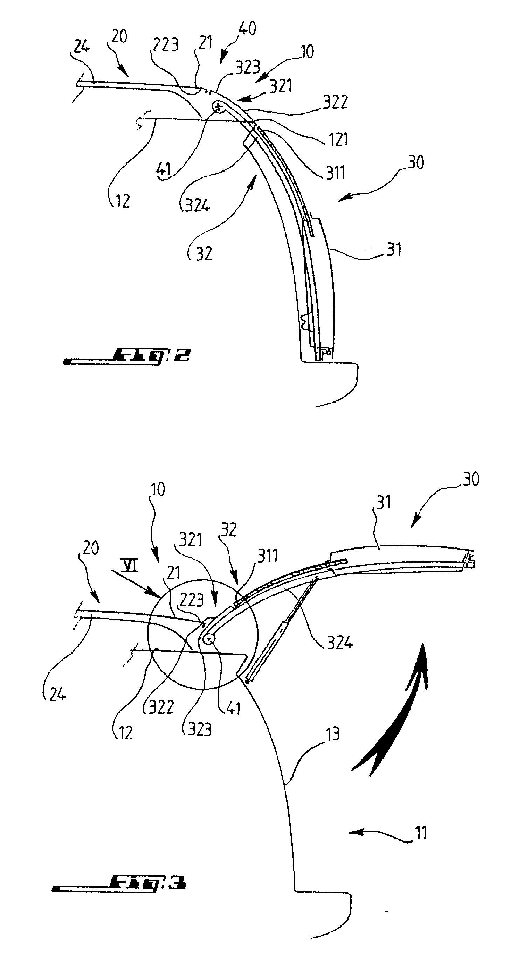

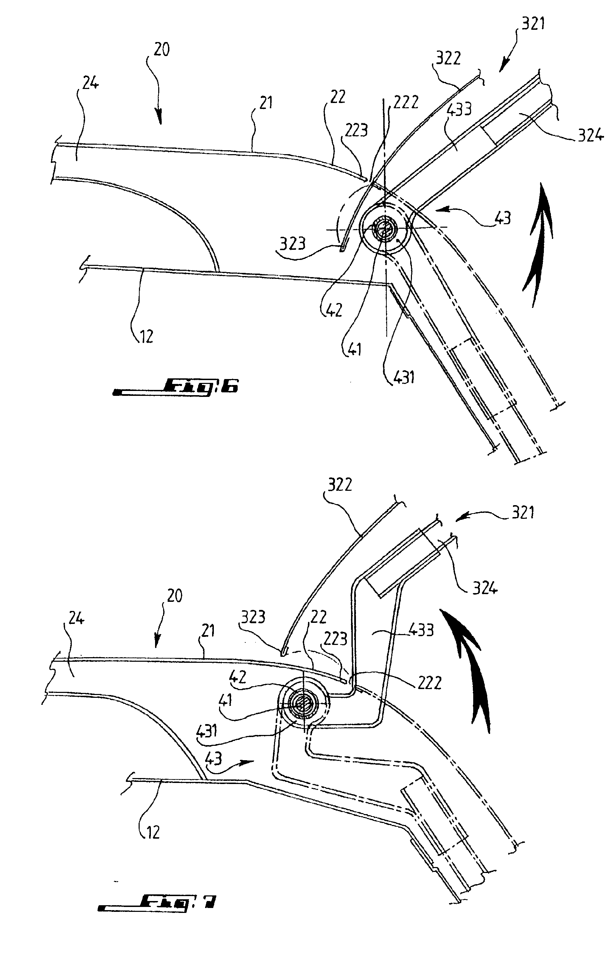

Comme le montrent les figures 4 et 5, les pieds arrière 21 sont des structures creuses en métal ou en matière plastique, présentant en coupe horizontale un contour fermé, sensiblement rectangulaire.

Chaque pied 21 comprend donc une face longitudinale intérieure 211 en vis à vis de l'autre pied arrière, une face longitudinale extérieure 212 opposée à la face longitudinale intérieure 211, une face transversale avant 223 à laquelle vient se raccorder la barre longitudinale 24, et une face transversale arrière 22 opposée à la face transversale avant 223.

Les pieds arrière 21 sont disposés relativement proche du bord arrière 121 du toit 12. De préférence, ils sont disposés le long du bord arrière 121 du toit, leurs faces arrière 22 respectives présentant un bord inférieur 221 s'étendant le long du arrière 121 du toit.

Les axes d'articulation 41 du dispositif d'articulation 40 sont logés dans ces pieds arrière 21.

La figure 1 montre également que le volet arrière 30 comprend un panneau 31 présentant un bord supérieur 311 s'étendant parallèlement et à proximité du bord arrière 121 du toit 12, et deux montants latéraux 32 parallèles et opposés, solidaires du panneau 31.

Le panneau 31 est sensiblement rectangulaire, et les montant latéraux 32 s'étendent le long des deux bords latéraux opposés de ce panneau.

Les montants 32 comprennent chacun une partie d'extrémité 321 faisant saillie au-delà du bord supérieur 311 suivant une direction générale s'étendant dans un plan perpendiculaire aux axes d'articulation 41.

Le dispositif d'articulation 40 comprend deux fourreaux 42, représentés sur les figures 4 à 7, libres en rotation autour des deux axes d'articulation 41 et solidaires des parties d'extrémités 321 des montants latéraux 32 du volet 30.

Par ailleurs, les faces arrière 22 des pieds arrière 21 comprennent chacune un orifice 222 ouvert au niveau du bord inférieur 221 de la face arrière 22 correspondante.

Ces orifices 222 sont identiques, de forme trapézoïdale, et présente un côté ouvert au niveau du bord inférieur 221, un fond 223 parallèle et opposé au côté ouvert, et deux bords latéraux 224 opposés convergeant vers le fond 223.

Les parties d'extrémité 321 des montants latéraux 32 sont engagées dans ces orifices 222 et comprennent des plaques extérieures 322 venant fermer ces orifices 222 en position fermée du volet 30.

Ces plaques extérieures 322 s'inscrivent exactement dans les orifices 222, et présentent en particulier chacun un bord libre 323 disposé en regard du fond 223 de l'orifice 222 en position fermée du volet. Ce bord libre 323 constitue une extrémité du montant 32 opposée au panneau 31.

Comme on le voit sur la figure 1, les plaques extérieures 322 affleurent par rapport à la face arrière 22 du pied 20, venant ainsi compléter cette face arrière. Les parties d'extrémités 321 des montants 32 s'intègrent ainsi parfaitement dans les pieds arrière 21 et dans le style du véhicule en position fermée du volet 30.

Dans une première variante de réalisation de l'invention illustrée sur la figure 6, les faces arrière 22 des pieds arrière 20 et les plaques extérieures 322 sont inclinées dans un sens anti-horaire par rapport à la verticale, les axes d'articulation 41 étant situés sous les orifices 22.

Un tel agencement fait que les bords libres 323 des plaques extérieures 322 des montants 32 s'escamotent dans les pieds arrière 21 en position ouverte du volet 30, comme représenté sur la figure 6.

Dans une seconde variante de réalisation, représentée sur la figure 7, chaque axe d'articulation 41 est situé relativement plus vers l'avant du véhicule que l'orifice 222 correspondant.

Les faces arrière 22 des pieds arrière 20 et les plaques extérieures 322 fermant l'orifice 222 sont inclinés dans un sens anti-horaire par rapport à la verticale en position fermée du volet 30.

L'angle d'inclinaison et la position des axes 41 sont choisis de telle sorte que, dans un plan perpendiculaire aux axes d'articulation 41, le segment de droite joignant le centre des axes d'articulation 41 au bord libre 323 de la plaque extérieure 322 dessine un angle obtus avec ladite plaque extérieure 322.

Les bords libres 323 des plaques extérieures 322, qui décrivent un cercle autour des axes d'articulation 41, viennent alors se placer au-dessus des barres de toit 20 en position ouverte du volet 30.

Les montants 32 comprennent chacun un bras d'articulation intérieur 324 s'étendant le long de la plus grande partie du montant 32 et solidaire de la plaque extérieure 322.

Comme le montre la figure 2, ces bras d'articulation 324 sont disposés d'un côté intérieur du volet 30, les plaques extérieures étant disposées d'un côté extérieur du volet 30.

On peut voir sur les figures 6 et 7 que le dispositif d'articulation 40 comprend pour chaque axe d'articulation 41 un flasque 43, ce flasque 43 présentant une partie en anneau 431 solidaire par un bord radialement intérieur du fourreau 42 et une deuxième partie allongée 432 solidaire de la première.

La première partie en anneau 431 est solidaire de la plaque extérieure 322 et la deuxième partie allongée 432 est solidaire du bras d'articulation 324.

Comme le montrent les figures 4 et 5, la première partie en anneau 431 du flasque 43 comprend des première et seconde demi coquilles 431a et 431b en tôles pliées.

La première demi coquille 431a s'étend dans un plan perpendiculaire à l'axe d'articulation et présente une forme d'anneau. Elle comprend une partie plane radialement extérieure, une partie radialement intérieure recourbée axialement et une partie radialement intermédiaire présentant un renflement 434a. Le renflement 434a fait saillie d'un premier côté de la demi coquille 431a. La partie radialement intérieure est recourbée vers un second côté de la demi coquille 431a opposé au premier côté. Le renflement 434a s'étend sur toute la périphérie de la demi coquille 431a.

La seconde demi coquille 431b est symétrique de la première demi coquille par rapport à un plan perpendiculaire à l'axe 41, à l'exception de la partie radialement intérieure de la seconde demi coquille, qui est recourbée dans la même direction axiale que la partie radialement intérieure de la première demi coquille.

Les première et seconde demi coquilles 431 a et b sont en appui l'une contre l'autre par leurs parties radialement extérieures. Ces parties sont soudées l'une avec l'autre.

La seconde demi coquille 431b comprend un renflement 434b formant sensiblement un tore avec le renflement 434a de la première demi coquille.

Enfin, les première et seconde demi coquilles 431a et b sont soudées par leurs parties recourbées radialement intérieures sur le fourreau 42.

La partie en anneau 431 du flasque 43 est solidarisée de la plaque extérieure 322 par une nervure 435. Cette nervure 435 comprend deux tôles pliées 435a et b, soudées par des premiers bords respectifs sur les parties radialement extérieures des deux demi coquilles 431a et 431b, et soudées par des seconds bords respectifs opposés aux premiers sur une face intérieure de la plaque extérieure 322.

Les tôles 435 a et b s'étendent parallèlement, principalement dans un plan perpendiculaire à l'axe d'articulation 41, à l'exception de leurs seconds bords respectifs qui sont repliés parallèlement à l'axe d'articulation 41 et plaqués contre la face intérieure de la plaque extérieure 322. Les seconds bords des tôles 435a et b sont repliés dans des directions mutuellement opposées.

Par ailleurs, chaque plaque extérieure 322 comprend des rebords 325 le long de ses deux côtés latéraux opposés, ces rebords 325 étant rabattus sur la face intérieure et venant emprisonner les seconds bords des tôles 435a et b.

La deuxième partie allongée 433 du flasque 43 est de section tubulaire, le bras d'articulation 324 venant s'emmancher par une extrémité dans cette dite deuxième partie.

On notera que la deuxième partie 433 du flasque 43 présente une forme générale différente dans les première et seconde variante de réalisation décrites plus haut.

La deuxième partie 433 est droite dans la première variante, illustrée sur la figure 6, et s'étend sensiblement parallèlement à la plaque extérieure 322.

Au contraire, elle est doublement coudé dans la seconde variante de réalisation, illustrée sur la figure 7. Cette deuxième partie, dans la position ouverte du volet 30, comprend un premier segment horizontal s'étendant à partir de la première partie en anneau du flasque jusqu'à un premier coude situé à la verticale de l'orifice 222 du pied arrière 21, un second segment vertical s'étendant vers le haut à travers l'orifice 222 entre le premier coude et un second coude, et un troisième segment oblique s'étendant à partir du second coude jusqu'à a une extrémité libre dans laquelle est emmanché le bras d'articulation 324. Ce troisième segment s'étend sensiblement parallèlement à la plaque extérieure 322. Cette forme est dictée par des raisons géométriques, la deuxième partie ne devant pas interférer avec le fond 223 de l'orifice 222 en position ouverte du volet 30.

Le dispositif d'articulation 40 comprend dans chaque pied arrière 21 des premier et second renforts 44 et 45 perpendiculaires à l'axe d'articulation 41 et solidaires de la caisse 10.

Ces premier et second renforts 44 et 45 sont des tôles pliées, comprenant respectivement des première et seconde parties centrales 441 et 451 planes et situées en vis à vis, et des premier et seconds rebords inférieurs 442 et 452 solidaires des première et seconde parties centrales et soudées sur la caisse 10.

Ces premier et second renforts 44 et 45 comprennent également respectivement des premier et second rebords avant 443 et 453, solidaires des première et seconde parties centrales, soudés l'un sur l'autre par des parties d'extrémités plaquées l'une contre l'autre.

L'axe d'articulation 41 logé dans ledit pied s'étend entre les première et seconde parties centrales 441 et 451 respectives des deux renforts et est solidaire de celles-ci.

Plus précisément, l'axe d'articulation 41 comprend une tête 411, un corps cylindrique 412 présentant des première et seconde faces axiales 413 et 414 et solidaire de la tête 411 par sa première face axiale 413, et une partie d'extrémité filetée 415 solidaire de la seconde face axiale 414 du corps cylindrique 412.

La tête 411, le corps cylindrique 412 et la partie d'extrémité 413 sont des cylindres coaxiaux présentant des sections de tailles décroissantes dans cet ordre dans un plan perpendiculaire à leur axe commun.

La tête 411 et le corps cylindrique 412 sont séparés par un épaulement 418 circulaire.

Les premier et second renforts 44 et 45 comprennent des premier et second trous 444 et 454 circulaires de tailles décroissantes dans cet ordre, le premier trou étant de diamètre intermédiaire entre celui du corps cylindrique 412 et celui de la tête 411, correspondant à celui de l'épaulement 418.

Le diamètre du second trou 454 correspond à celui de la partie d'extrémité filetée 415.

La partie d'extrémité 415 et le corps cylindrique 412 sont respectivement engagés dans les second et premier trous 454 et 444, l'épaulement 418 venant se placer exactement dans le premier trou 444.

La tête 411 vient en appui contre une face extérieure 445 du premier renfort 44 opposée au second renfort 45.

Le corps 412 s'étend entre les premier et second renforts 44 et 45 et vient en appui par sa seconde face axiale 414 contre une face intérieure 455 du second renfort 45 en vis à vis du premier renfort 44.

La partie d'extrémité 415 fait saillie sur une face extérieure 456 du second renfort 45 opposée à la face intérieure 455.

Un écrou 418 est vissé sur la partie d'extrémité filetée 415, de telle sorte que le second renfort 45 est pressé entre l'écrou 418 et la seconde face axiale 414 du corps cylindrique 412, et que la tête 411 est plaquée contre la face extérieure 445 du premier renfort 44.

Le fourreau 42 est cylindrique et s'étend autour du corps cylindrique 412. Il est bloqué en translation axiale d'un côté par l'épaulement 418 et de l'autre par la face intérieure 455 du second renfort 45.

On notera enfin, comme le montrent les figures 4 et 5, que la tête 411 de l'axe d'articulation 41 porte un relief en creux 416 sur une face extérieure 417 opposée au corps cylindrique 412.

Ce relief en creux 416 présente typiquement une forme hexagonale.

Le pied arrière 21 de la barre de toit 20 correspondante comprend sur sa face longitudinale intérieure 211 un orifice obturé par un bouchon amovible 23, situé en regard de ladite face extérieure.

Cet orifice permet d'introduire un outil de forme correspondante au relief en creux 416 dans le pied arrière 21 pour régler ou démonter l'axe d'articulation 41.

Cet outil est typiquement une clé présentant une tête hexagonale, permettant de tourner l'axe 41 de façon à resserrer ou desserrer l'écrou 46.

Le bouchon 23 s'intègre dans la continuité de la face longitudinale intérieure 211.

## Revendications

1. Véhicule automobile, notamment de type break, comprenant une caisse (10) présentant un côté arrière (11) percé d'une ouverture de chargement arrière (13), un volet arrière (30) mobile en rotation par rapport à la caisse (10) entre une position fermée dans laquelle le volet arrière (30) obture l'ouverture arrière (13) et une position ouverte dans laquelle le volet arrière (30) dégage l'ouverture arrière (13), et un dispositif d'articulation (40) du volet arrière (30) sur la caisse (10), la caisse (10) comprenant un toit (12) et deux barres de toit (20) longitudinales faisant saillie au dessus du toit (12) et fixées des deux côtés latéraux opposés du toit (12), **caractérisé en ce que** le dispositif d'articulation (40) comprend deux axes d'articulation (41) du volet arrière (30) sur la caisse (10) disposés à l'intérieur des barres de toit (20), **en ce que** chaque barre de toit (20) comprend un pied arrière (21) relativement proche d'un bord arrière (121) du toit (12), les barres de toits (20) étant solidaires du toit (12) par ces pieds arrière (21), les axes d'articulation (41) du dispositif d'articulation étant logés dans ces pieds arrière (21), et **en ce que** le volet (30) comprend un panneau (31) présentant un bord supérieur (311) s'étendant parallèlement et à proximité du bord arrière (121) du toit (12), et deux montants latéraux (32) opposés solidaires du panneau (31), ces montants (32) comprenant des parties d'extrémité (321) faisant saillie par rapport à ce bord supérieur (311), le dispositif d'articulation (40) comprenant deux fourreaux (42) libres en rotation autour des deux axes d'articulation (41) et solidaires des parties d'extrémités (321) des montants latéraux (32) du volet (30).

2. Véhicule automobile, selon la revendication 1, **caractérisé en ce que** les pieds arrière (21) comprennent des faces arrière (22) présentant un bord inférieur (221) parallèle au bord supérieur (311) du panneau (31), ces faces arrière comprenant chacune un orifice (222) ouvert au niveau du bord inférieur (221) et présentant un fond (223) opposé au bord inférieur (221), les parties d'extrémité (321) des montants latéraux étant engagées dans ces orifices (222) et comprenant des plaques extérieures (322) venant fermer ces orifices (222) en position fermée du volet (30) en affleurant par rapport à la face arrière (22) du pied, les plaques extérieures (322) de chaque partie d'extrémité (321) présentant un bord libre (323) disposé en regard du fond (223) de l'orifice (222) en position fermée du volet (30).

3. Véhicule automobile selon la revendication 2, **caractérisé en ce que** les faces arrière (22) des pieds arrière (21) sont inclinées vers l'arrière, leurs bords inférieurs (221) étant relativement plus à l'arrière que le reste des faces arrière (22), les axes d'articulation (41) étant situés sous les orifices (222), de telle sorte que les bords libres (323) des plaques extérieures (321) des montants (32) s'escamotent dans les pieds arrière (21) en position ouverte du volet (30).

4. Véhicule automobile selon la revendication 3, **caractérisé en ce que** chaque axe d'articulation (41) est situé relativement plus vers l'avant du véhicule que l'orifice (222) correspondant, la plaque extérieure (322) fermant l'orifice (222) étant inclinée en position fermée du volet (30) de telle sorte que, dans un plan perpendiculaire à l'axe d'articulation (41), le segment de droite joignant ledit axe d'articulation (41) au bord libre (323) de la plaque extérieure (322) dessine un angle obtus avec ladite plaque extérieure, les bords libres (323) des plaques extérieures (321) venant alors se placer au dessus des barres de toit (20) en position ouverte du volet (30).

5. Véhicule automobile, selon l'une quelconque des revendications 2 à 4, **caractérisé en ce que** les montants (32) comprennent chacun un bras d'articulation (324) intérieur s'étendant le long de la plus grande partie du montant (32) et solidaire de la plaque extérieure (322), le dispositif d'articulation (40) comprenant un flasque (43) présentant une première partie (431) en anneau solidaire par un bord radialement intérieur du fourreau (42) et une deuxième partie (433) allongée solidaire de la première, la première partie en anneau (431) étant solidaire de la plaque extérieure (322) et la deuxième partie allongée (433) étant solidaire du bras d'articulation (324).

6. Véhicule automobile, selon l'une quelconque des revendications 1 à 5, **caractérisé en ce que** le dispositif d'articulation (40) comprend dans chaque pied arrière (21) des premier et second renforts (44, 45) perpendiculaires à l'axe d'articulation (41) et solidaires de la caisse (10), l'axe d'articulation (41) logé dans ledit pied s'étendant entre ces deux renforts (44, 45) et étant solidaire de ceux-ci.

7. Véhicule automobile selon la revendication 6, **caractérisé en ce que** l'axe d'articulation (41) comprend une tête (411), un corps cylindrique (412) présentant des première et seconde faces axiales (413, 414) et solidaire de la tête (411) par sa première face axiale (413), et une partie d'extrémité filetée (415) solidaire de la seconde face axiale (414) du corps cylindrique (412), la tête (411), le corps cylindrique (412) et la partie d'extrémité filetée (415) présentant des sections de tailles décroissantes dans cet ordre dans un plan perpendiculaire à l'axe du corps cylindrique (412), les premier et second renforts (44, 45) comprenant des premier et second trous de tailles décroissantes, la partie d'extrémité filetée (415) et le corps cylindrique (412) étant respectivement engagés dans les second et premier trous, de telle sorte que la tête (411) vient en appui contre une première face extérieure (445) du premier renfort (44) opposée au second renfort (45), le corps (412) s'étendant entre les premier et second renforts (44, 45) et venant en appui contre une face intérieure (455) du second renfort (45) en vis à vis du premier renfort (44), et la partie d'extrémité filetée (415) faisant saillie sur une seconde face extérieure (456) du second renfort (45) opposée à la face intérieure (455), un écrou (46) étant vissé sur la partie d'extrémité filetée (415) .

8. Véhicule automobile selon la revendication 7, **caractérisé en ce que** la tête (411) de l'axe d'articulation (41) porte un relief en creux (416) sur une face axiale extérieure (417) opposée au corps cylindrique (412), la barre de toit (20) correspondante comprenant un orifice muni d'un bouchon amovible (23) en regard de ladite face axiale extérieure permettant d'introduire un outil de forme correspondante au relief en creux (416) dans le pied arrière (21) pour régler ou démonter l'axe d'articulation (41).
